# EUROPEAN PATENT APPLICATION

(11) **EP 3 206 007 A1**
(43) Date of publication of application: **16.08.2017**
(21) Application number: 16155464.7
(22) Date of filing: 12.02.2016
(51) Int. Cl.: G01M 15/10

(54) **METHOD FOR PERFORMING A TEST DRIVE OF A VEHICLE**

(71) Applicant: AVL POWERTRAIN UK LTD, Basildon SS15 6SR (GB)
(72) Inventor: Bodisco, Timothy Alexis, WESTCLIFF ON SEA SS0 9UN (GB); Fang, Ke, LAIDON SS15 6SX (GB); Shah, Nirav Pramod, BASILDON SS14 2FA (GB); Gao, Bo, BILLERICAY CM12 0PZ (GB); Fuente San Juan, Cayetano David, LONDON E14 3WB (GB)
(74) Representative: Babeluk, Michael

(57) **Abstract**

The invention relates to a method for performing a test drive of a vehicle in a real world environment, the method iteratively performing the following steps: a) collecting data from at least one of the following sources in real-time during the test drive: PEMS-kit, vehicle OBD-port, vehicle NOx-sensor, GPS; b) determining one or more of the following parameters from the data collected in step a) in real-time during the test drive: vehicle speed, fuel consumption, torque, engine speed, NOx-value, CO-value, CO₂-value, GPS-information; c) determining multiple characterizing values from the parameters of step b) in real-time during the test drive, wherein at least one characterizing value is calculated using an evaluation routine; and d) visualizing the results of step c) on at least one display unit (100) in real-time during the test drive.

## Description

The present invention relates to a method for performing a test drive of a vehicle in a real world environment.

Increasingly, legislative initiatives aim at reducing emissions of vehicles with integrated combustion engines during regular use. Earlier test procedures, e.g, NEDC ("New European driving cycle"), relied on specific cycles performed on test beds which allowed optimization of engines to pass the tests and their respective emission limits. However, in day-to-day usage emissions did not conform to those limits. Hence, there are concerns that emissions testing with homologation cycles such as the NEDC under laboratory conditions might not represent actual on-road emissions of vehicles with sufficient accuracy.

To address such concerns new regulations as, for instance, regulation No. 715/2007 and the comitology regulation No. 692/2008 of the European Commission, require that all new vehicles will be type approved on real roads during business hours under real driving conditions with portable emission measurement systems (PEMS) to a set of fixed criteria.

The PEMS used for such purposes integrate advanced gas analyzers, exhaust mass flow meters, weather station, global positioning system (GPS) and connection to the vehicle networks. The term "portable" indicates that the instrumentation may be carried with ease and does not contribute too much to the mass of a tested vehicle. The term "mobile" clarifies that the instrumentation is capable of moving or being moved with the tested vehicle. In addition to emission information they allow recording of operation parameters, position from GPS and ambient conditions.

PEMS provide a complete and very accurate real-time monitoring of different pollutants emitted by the engines - particularly, HC, CO, CO₂, NOₓ, particulate matter (PM) and particulate number (PN) - together with the associated engine, vehicle and ambient parameters. One example of such a PEMS is the "AVL M.O.V.E. GAS PEMS Portable Exhaust Gas Analyzer" which is an easy-to-install, compact, robust and precise emission measurement system for the determination of real-time soot and PM emissions with the exhaust gas of diesel and gasoline engines.

Part of abovementioned criteria of the Euro 6.2 emissions regulation is that vehicles are driven in urban (speed <60 km/h), rural (speed <90 km/h) and motorway (speed <145 km/h with possible deviations to a maximum of 160 km/h for 3% of test time) environments in equal proportion (34/33/33 +/- 10%) with a minimum of 29% of urban both by topographical map and instantaneous distribution.

A further requirement of the Euro 6.2 emissions regulation is that the measured emissions must be processed through a 'normalisation tool'. Normalisation tools are intended to ensure consistent emission results from each drive, i.e., to smooth out the random effects experienced on a real road (compared to a repeatable environment, such as a laboratory or a test bed). The European Commission has currently approved two such normalisation tools - for Euro 6.2 manufacturers will be allowed to choose between them. Most likely later legislation, e.g. Euro 7, will mandate one over the other.

The tools are: "EmRoad" of JRC (Joint Research Council) and "Clear" by Technical University of Graz (TUG), Austria.

The "EmRoad," tool works by generating time-averaged windows based on exhausted CO₂ (half the CO₂ emitted during the WLTP - "Worldwide Harmonized Light-Duty Vehicles Test Procedure"). Each time-averaged window is then compared to a reference chart which is also developed from WLTP results. Final emission values for urban, rural and motorway are then determined from these windowed results and a normalized emission result produced by the average of these three values.

The "Clear" tool works by fitting the data to a goal pattern defined by the vehicles' road load characteristics. Each data point is weighted based on how far or close its power bin is to this distribution. A single normalized total result, an urban, a rural, a motorway and a 1/3 weighted result which is the average of the urban, rural and motorway results are then given.

A vehicle's conformity factor (i.e., how compliant to the legislation it is) is then generated from the normalized result and if the conformity factor meets the European Commission's requirement and the drive meets all of the defined criteria the vehicle can be certified for production and sold in the European market.

However, the current approach with abovementioned tools only allows post-processing. This means that only after abovementioned test drives which are demanding in terms of time and fuel does a development engineer know whether the vehicle and its calibration are compliant with the legislative criteria regarding trip requirements and emissions. Also, the standardized tools require manufacturers to format their data after the test drives before they get post-processing results and can draw their engineering solutions.

It is therefore the object of the present invention to overcome abovementioned problems by providing a solution for faster feedback on legislative conformity of a vehicle without the strenuous adaptation work necessary when using standardized post-processing solutions.

This object is reached by the method according to the present invention with the iterative performance of the following steps:
a) collecting data from at least one of the following sources in real-time during the test drive: PEMS-kit, vehicle OBD-port, vehicle NOx-sensor, GPS;
b) determining one or more of the following parameters from the data collected in step a) in real-time during the test drive: vehicle speed, fuel consumption, torque, engine speed, NOx-value, CO-value, CO₂-value GPS-information;
c) determining multiple characterizing values from the parameters of step b) in real-time during the test drive, wherein at least one characterizing value is calculated using an evaluation routine; and
d) visualizing the results of step c) on at least one display unit in real-time during the test drive.

The method is performed within a calculating unit - a PC, the engine control unit or other suitable devices - which is connected to a PEMS-kit, the vehicle OBD-port or one or more of a vehicle's NOx-sensors or collects data from GPS. Data collection and determination of parameters from the data is done in real-time. Also, determination and visualization of characterizing values is done in real-time during the test-drive. In prior art there are no means of live assessing test-drives, e.g., during the type approval process. The method according to the invention allows automotive manufacturers during product development and third party assessors who conduct type approval at a later stage to ensure that each drive meets regulation criteria, especially with respect to normalization tools (one possible implementation of the evaluation routines of step c). The invention allows live updates during a drive: Characterizing values are displayed - e.g., in visual, aural or tactual form - and may be compared with corresponding limit values. This means that for each characterizing value a limit value can be defined, e.g., by legislative requirements. By displaying the value and its limit value compliance with such regulations can easily be determined. Hence, the method allows real-time information about tests and compliance with legislative requirements.

In a variant of the invention, in step c) at least one or more of the following characterizing values is calculated: total time (of the test-drive), distance travelled, urban/rural/motorway proportions of test drive, idle share of test drive, driver aggressiveness, NOx-emission, NOx raw value, NOx weighted value, CO-emission, CO raw-value, CO weighted value, PN raw-value, PN weighted value, conformity factor, live direction. Also the CO₂-values like current or aggregated emission, raw-value and weighted value might be calculated. Such characterizing values allow examination of basic legislative requirements.

In yet another variant, the evaluation routine of step c) is at least one of the following: JRC EmRoad, TUG Clear. Using these normalization tools it is possible to implement the invention in the form of software which will take live updates from the vehicle as it is driven to show how compliant the drive is to the EU Commission requirements in real-time.

To allow for more detailed analysis of regular drive data collection in step a) is initiated after a specified time period after initiation of the test drive or once the temperature of the engine of the vehicle is higher than a specified temperature after initiation of the test drive. It is also possible to initiate the test drive whenever one of abovementioned criteria - time of test drive or engine temperature - is fulfilled. The specified time may be 5 minutes, the specified temperature of the engine may be 70°C. Of course, other values may be chosen.

When driver aggressiveness is determined as one characterizing value step c) advantageously comprises the following sub-steps: c1) monitoring multiple aggressiveness metrics wherein each metric has a specific fail boundary value; c2) selecting the metric most likely to fail; and c3) defining the selected metric's output as characterizing value for driver aggressiveness.

Fail boundary value in step c1) means that when the output of the metric exceeds or falls below (depending on metric and value) this value the test drive is qualified as fail. Hence, the metrics are checked in real-time whether any (or more) of them is/are likely to fail the boundary value which could be derived, e.g., from legislative requirements. In step c2) the metric most likely to fail is selected.

In a variant of the invention, the aggressiveness metrics are chosen from:
- a NOx-metric, where the output is the average of a second-by-second weighting of NOx-values;
- an Acceleration-metric, where the output is the maximum absolute value for acceleration and deceleration during a specified time period, preferably 30 seconds;
- a "velocity * Positive Acceleration"-metric, where the output is the 95^{th} percentile value for each urban and rural and motorway data points; and
- a Window-metric, where moving-average-windows based on emissions are defined for urban and rural and motorway passages and classified as normal and not normal depending on distance-specific emissions and the output is the percentage of windows that are not normal in each urban and rural and motorway passages.

The NOx-metric may be based on analysis of the Clear algorithm giving a second-by-second weighting of NOx-values. The average of these weights (which may be further weighted by the NOx numbers if they are available) is the output and can become the characterizing value of the driver aggressiveness.

The acceleration-metric is based on fixed maximum acceleration and maximum deceleration values, for instance 4 m/s² and -4 m/s². The respective values of a specified period of time, e.g. 30 seconds as stated above, are considered. The maximum absolute value in that time is the characterizing value of the aggressiveness. Unless the test drive has already become invalid because of this metric, then that will be the fixed output - invalidity means that a limit value has already been exceeded.

For the "velocity * Positive Acceleration"-metric takes into account that there are fixed limits on the 95^{th} percentile value for each urban and rural and motorway data points - these three numbers are characterizing values for the aggressiveness. At the beginning of a test drive only urban data points are available and used for this metric.

The window-metric may be based on the EmRoad normalization tool. The characterizing values for the aggressiveness are the percentage of windows that are not normal for each urban and rural and motorway passages. Initially, windows will be based on pre-warm data to allow immediate information about aggressiveness. Else it would take too long to have a characterizing value for aggressiveness.

Of course, other metrics are possible as well.

Pre-warm data here means that data will be handled by using CO₂- or other emissions exhausted in the first minutes (most likely first five minutes) of the test drive as the starting size for the windows ("moving average windows" - MAW). The size of the window will then be linearly increased to the predicted time that it reaches half WLTP. A higher sampling rate may be used where the systems allow it for the pre-warm data.

If none of abovementioned metrics is likely to fail than NOx-metric or Window-metric are chosen depending on their results and likely impact for weighted NOx. The same applies for metrics in connection with CO or PN (e.g., for gasoline engines).

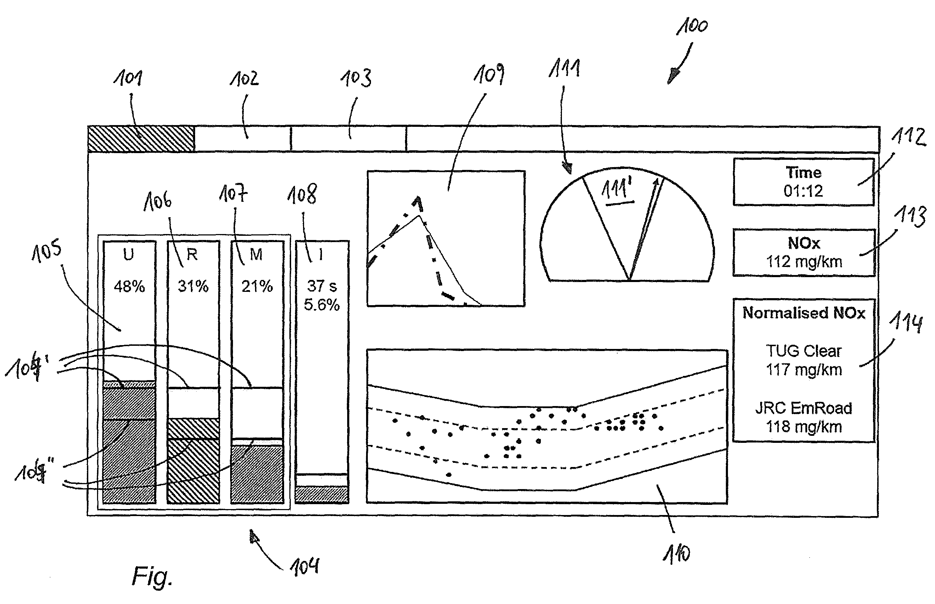

The invention will now be explained with particular reference to the accompanying drawing with a preferred non-limitative embodiment. The figure shows an exemplary implementation of the method according to the invention.

The method allows assessment of the validity of drives with a vehicle equipped with one or more measurement systems against legislative regulations, e.g., by the European Commission or other competent bodies, in real-time. The measurement systems may be PEMS-kits or NOx-sensors or the like in combination with OBD-systems/-ports as well as GPS. While the embodiment below discusses application of the method to Diesel-engines (focus on NOx-values) it may also be applied to gasoline engines where the focus also lies on CO and PN.

The method according to the invention allows a development engineer to know if a vehicle is driven in a manner compliant with the rules. It also gives information during the drive how effective a calibration is at meeting emissions targets. As it is processing the data live while the vehicle is being driven it also eliminates the need for a development engineer to wait until returning to an office to perform post-processing. A development engineer will know immediately whether or not the drive successfully met the criteria (trip requirements and emissions) and what the respective outcome is.

The current state of the art are the post-processing tools developed by JRC and TUG. The advantages of the method according to the invention is that it can provide not only a post-processed result, but it can also provide a real-time result as the drive progresses. Moreover, currently manufacturers must format their data to be appropriate for each post-processing tool. The method according to the invention eliminates this need as it takes the data directly from a data logger/PEMS kit/OBD port/GPS, and provide all of the relevant trip statistics, emission results and process the data through the normalization tools.

The method according to the invention in a first step collects data in real-time. Data taking may be initiated after a specified period of time after initiation of the test drive or once the temperature of the engine of the vehicle or its cooling system is higher than a specified temperature. From the data, one or more parameters like vehicle speed, NOx-value, CO₂-value torque, fuel consumption, GPS-information and the like are determined.

From these parameters characterizing values are determined, e.g. by use of an evaluation routine. Characterizing values may be total time, distance travelled, urban/rural/motorway proportions of test drive, idle share of test drive, driver aggressiveness, NOx-emission, NOx raw value, NOx weighted value, conformity factor (i.e., whether and to which extent the test drive fulfills legislative requirements - legal NOx limits of 80 mg/km correspond to 120 mg/km when a conformity factor of 1,5 is applied) and live direction from GPS-data. Also PN raw-values or PN weighted values might be determined.

The figure shows an example of the method and its implementation: A display unit 100 which is of course customizable by a user shows multiple tabs 101, 102, 103. A first tab 101 shows a live view of the information logged by the sensor systems. A second tab 102 allows viewing and adjusting the setup while a third tab 103 gives details about the input data. Second and third tab are not further discussed here.

In a driving proportion section 104 various bars 105, 106, 107, 108 show instantaneous driving proportions in real-time: An urban bar 105 shows the proportion of urban driving, a rural bar 106 the proportion of rural driving, the motorway bar 107 shows the proportion of motorway driving and the idle bar 108 gives information about the amount of the drive the vehicle was in idle mode. As explained above urban driving does not exceed 60 km/h, rural speed is between 60 km/h and 90 km/h and motorway driving is until 145 km/h. The value for motorway driving may be exceeded for up to 3% of the testing time to a maximum of 160 km/h.

Since regulations may require minimum and maximum shares of each type of driving the bars in the driving proportion section 104 show upper thresholds 104' and lower thresholds 104" for the respective type of driving. In the example shown in the figure only the rural driving is within the specified thresholds which means that the user has to adjust his driving accordingly.

Characterizing values for the test drive and results of evaluation routines such as normalization tools are also displayed in the display unit 100. The embodiment shows the results for the two normalization tools currently in use, a TUG Clear goal pattern 109 and the JRC EmRoad reference chart 110. Other evaluation routines and normalization tools can be used as well.

Below, a short overview of the two tools and how they process data in post processing is given - further details are well known in the arts and not given here.

EmRoad by JRC employs data like vehicle speed (km/h), CO₂ (g/sec) and NOx (g/sec) - the latter are usually taken in terms of concentration and converted in an emission flow rate using exhaust mass flow. Based on the WLTP also half of the amount of total WLTP-CO₂ and CO₂ g/km is used as input data.

In an optional step the periods of time that the vehicle is idle may be removed.

Starting from the last data point taken moving average windows (MAW) are generated where the window size is equal to half of the total CO₂ emitted during WLTP - windows are generated from the end of data-taking to as close to the start of the data as the window size allows.

For each average window the g/km CO₂ and NOx are calculated along with the average vehicle speed. Each window is then plotted as CO₂ vs. vehicle speed. Superimposed on this plot are the three WLTP points with a line being drawn through the three points with 20 percent, ten percent and five percent added to them respectively. Additional lines are then added that are 25 percent and 50 percent above and below this line. Data not enclosed by the above and below 50 percent-lines are out of tolerance and excluded from the analysis; the data between the 25 percent- and 50 percent-lines are either soft or agressive driving and the data between the 25 percent-lines are considered normal.

Weights for each window are then determined - "out of tolerance"-data are given a weight of "0", data between the 25 percent-lines are given a weight of "1", data between the 25 percent- and 50 percent-lines are weighted from "1" to "0" linearly based on the distance away from the 25 percent-line.

Each window is then characterised as being an urban, rural or motorway window based on the average speed. Urban(U)/rural(R)/motorway(M) NOx-values are then determined by the weighted average of the NOx-values for each window (for each U/R/M category). A normalized (or weighted) NOx-value is then determined by the average of these three numbers. The process will only meet the boundary conditions if at least 50 percent of the windows in each category are classified as being normal (between the 25 percent-lines) and that at least 15 percent of the windows are in each category.

In the method according to the invention the real-time version of the tool will only differ very slightly. Instead of starting from the end of the data and look toward the start the data will be looked at as it is collected. A running cumulative CO₂-number will be stored and at each data point (using the previous reference; to ensure that the total CO₂ will be greater than 50 percent WLTP) the front of the window will be determined. Stored under that window position will then be the average CO₂, NOx and vehicle speed across that window. To increase the performance a running distance calculation and a cumulative NOx-calculation can be applied. That window position will then be displayed on the JRC EmRoad reference chart 110 and the weight of the window, percentage of normal windows (splitting the soft and agressive windows) and if possible the effect on the NOx will then be forwarded to the aggressiveness index calculator which is displayed in the driver aggressiveness chart 111.

Clear by TUG allows three options to normalize with, distribution based on Power, CO₂ or a Gamma distribution (also based on power). The description below will be based on the power as that is the likely one to be used in the legislation; the process is nearly the same for the other two in any case.

Data like vehicle speed (km/h), NOx (g/h) and power (kW) is taken as well as road load information (R0, R1, R2), interia class weight (SMK) and rated power.

A goal pattern is produced from internal constants, the reference velocity and acceleration and the built in normalised power distribution, and input values, R0, R1 and R2 (values corresponding to the road load of the vehicle) and the inertia class weight.

This goal pattern consists of eleven bins (i.e., 12 numbers). The goal pattern is further processed by a simple redistribution algorithm based on the rated power.

The number of data points in each goal pattern power bin from the input data are collected.

The distribution of the real data is then adjusted against the goal pattern data and a multiplier for each data point is then determined to generate a weighted NOx and a weighted vehicle speed for each bin.

The sum of the weigted NOx (the bins) is then divided by the sum of the weighted vehicle speeds, producing a weighted NOx (g/km) result.

In the most current version this process is then repeated for the data points corresponding to urban/rural/motorway individually and then the three numbers are averaged for a one third weighted NOx value. Different goal patterns are used for these, but the process is identical.

In the method according to the invention the tool will constantly (i.e., in real-time) evaluate the difference between the goal pattern and the one actually being produced. This is done by continuously updating a table of the eleven bins which will calculate the difference between the raw NOx and weighted NOx. This data is shown in the TUG Clear goal pattern 109.

In addition to the parameters explained above - vehicle speed, NOx-value and CO₂-value - also values like torque, fuel consumption, GPS-information and the like are used by the method according to the invention.

Based on the results of the normalization tools a driver aggressiveness is determined and displayed in the driver aggressiveness chart 111 with an ideal range area 111'. Aggressiveness may be determined by monitoring multiple aggressiveness metrics like a NOx-metric, an acceleration metric, a "velocity * positive acceleration"-metric and a window-metric, selecting the metric most likely to fail and defining the selected metric's characterizing value for driver aggressiveness. Because all of the different metrics can cause the test drive to become invalid, at each iteration a selection function chooses the metric the drive is most likely to fail on (at that point) and reports aggressiveness. For that, the outputs of the metrics are checked to see if any of them are likely to cause the drive to fail a boundary condition (e.g., as stated in the legislation). If any of them are likely to do this, then that metric becomes the selected one. If none of the metric are likely to make it fail, then the chosen metric will be that which is most likely to have the greatest negative effect on the weighted NOx.

The NOx-metric uses the NOx-values, e.g. from the TUG Clear normalization tool, for a real-time weighing of the NOx-values which are then averaged; optionally, they may be further weighted by the NOx-numbers, if available.

The acceleration metric applies fixed maximum acceleration and minimum deceleration values - e.g., 4 m/s² and -4 m/s² - and the maximum absolute value is the output. Since history is not important with this value a fixed amount of time is considered, e.g. the previous 30 seconds for each data point/output value.

The "velocity * positive acceleration"-metric uses the fixed limits on the 95^{th}-percentile value for each urban/rural/motorway data points (as soon as they are available - at the beginning only urban may be used) as output.

In the window-metric moving-average-windows based on emissions are defined for urban and rural and motorway passages and classified as normal and not normal depending on distance-specific emissions and the output is the percentage of windows that are not normal in each urban and rural and motorway passages.The window-metric may be based on the EmRoad normalization tool. The characterizing values for the aggressiveness are the percentage of windows that are not normal for each urban and rural and motorway passages. Initially, windows will be based on pre-warm data to allow immediate information about aggressiveness. Else it would take too long to have a characterizing value for aggressiveness.

The display unit 100 also features a total time display 112, e.g., with the total time of the test drive and emission displays, e.g., the NOx-display 113 and the normalized NOx-display 114 with the results of the normalization tool(s).

The method according to the invention provides real-time information about the conformity of a test drive with various legislative rules and allows real-time assessment instead of strenuous post-processing steps. It is possible to give feedback about a driver's aggressiveness, compliance with required shares of urban, rural and motorway driving and idle time. Also, live updates about conformity factors for CO, NOx or other emission can be given. In addition, a user gets real-time feedback if a test drive no longer becomes probable to pass, e.g. because of the driving route and/or emission compliance.

## Claims

1. Method for performing a test drive of a vehicle in a real world environment, the method iteratively performing the following steps:
a) collecting data from at least one of the following sources in real-time during the test drive: PEMS-kit, vehicle OBD-port, vehicle NOx-sensor, GPS;
b) determining one or more of the following parameters from the data collected in step a) in real-time during the test drive: vehicle speed, fuel consumption, torque, engine speed, NOx-value, CO-value, CO₂-value GPS-information;
c) determining multiple characterizing values from the parameters of step b) in real-time during the test drive, wherein at least one characterizing value is calculated using an evaluation routine; and
d) visualizing the results of step c) on at least one display unit (100) in real-time during the test drive.

2. Method of claim 1, wherein in step c) at least one or more of the following characterizing values is calculated: total time, distance travelled, urban/rural/motorway proportions of test drive, idle share of test drive, driver aggressiveness, NOx-emission, NOx raw value, NOx weighted value, CO-emission, CO raw-value, CO weighted value, PN raw-value, PN weighted value, conformity factor, live direction.

3. Method of claim 1 or 2, wherein the evaluation routine of step c) is at least one of the following: JRC EmRoad, TUG Clear.

4. Method of any of the preceding claims, wherein the data collection in step a) is initiated after a specified time period after initiation of the test drive or once the temperature of the engine of the vehicle is higher than a specified temperature after initiation of the test drive.

5. Method of any of the preceding claims, wherein driver aggressiveness as one characterizing value is determined in step c) with the following steps:
c1) monitoring multiple aggressiveness metrics wherein each metric has a specific fail boundary value; and
c2) selecting the metric most likely to fail;
c3) defining the selected metric's as characterizing value for driver aggressiveness.

6. Method according to claim 5, wherein the aggressiveness metrics are chosen from:
• a NOx-metric, where the output is the average of a second-by-second weighting of NOx-values;
• an Acceleration-metric, where the output is the maximum absolute value for acceleration and deceleration during a specified time period, preferably 30 seconds;
• a "Velocity * Positive Acceleration"-metric, where the output is the 95^{th} percentile value for each urban and rural and motorway data points; and
• a Window-metric, where moving-average-windows based on emissions are defined for urban and rural and motorway passages and classified as normal and not normal depending on distance-specific emissions and the output is the percentage of windows that are not normal in each urban and rural and motorway passages.
